# EUROPEAN PATENT APPLICATION

(11) **EP 4 848 516 A1**
(43) Date of publication of application: **02.12.2026**
(21) Application number: 26168510.1
(22) Date of filing: 27.03.2026
(51) Int. Cl.: H02J 3/32, H01M 10/44, H02J 3/38, H02J 7/50, H02J 101/24, H02M 3/158

(54) **PHOTOVOLTAIC ENERGY STORAGE SYSTEM**

(30) Priority: 27.05.2025 CN 202510695718
(71) Applicant: Shanghai Sigeyuan Intelligent Technology Co., Ltd, Shanghai 201306 (CN)
(72) Inventor: LUO, Chenghu, Shanghai, 201306 (CN); FU, Kai, Shanghai, 201306 (CN)
(74) Representative: Di Bernardo, Antonio

(57) **Abstract**

Provided is a photovoltaic energy storage system, which belongs to the field of photovoltaic energy storage. The photovoltaic energy storage system includes: a first DC/DC converter, an end of the first DC/DC converter being connected to a first connection point; a second DC/DC converter, an end of the second DC/DC converter being connected to a second connection point; a bus capacitor connected to another end of the first DC/DC converter and another end of the second DC/DC converter; an internal battery pack; a first switch having an end connected to the first connection point, and another end connected to the internal battery pack; at least one second switch, an end of each of the at least one second switch being connected to the second connection point, and another end of each of the at least one second switch being connected to a corresponding external battery pack; and a third switch connected between the first connection point and the second connection point, where the first switch, the second switch, and the third switch are configured to enter corresponding on/off states based on a charge-discharge mode of the photovoltaic energy storage system. The photovoltaic energy storage system of the present disclosure has high flexibility and versatility.

## Description

The present application claims priority to Chinese Patent Application No. 202510695718.5, titled "PHOTOVOLTAIC ENERGY STORAGE SYSTEM", filed on May 27, 2025 with the China National Intellectual Property Administration.

### FIELD

The present disclosure belongs to the field of photovoltaic energy storage, and more particularly, to a photovoltaic energy storage system.

### BACKGROUND

A photovoltaic energy storage system is currently a most common new power generation system in a renewable energy industry. The system mainly uses a photovoltaic effect of solar panels to convert solar energy into electrical energy, which is then either stored in a battery, converted via an inverter for use, or fed into a power grid. In the related art, especially in a small photovoltaic energy storage system, the stacked mode design is favored since the design can be modularized and offer convenience to a user. However, the modularized design has poor scalability and low flexibility, making it difficult to cope with a complex and varying power demand.

### SUMMARY

The present disclosure aims to solve at least one of the technical problems in the related art. Therefore, the present disclosure provides a photovoltaic energy storage system. The photovoltaic energy storage system can control each switch to enter a corresponding on/off state based on a required charge-discharge mode and a condition of an external battery pack, thereby controlling the photovoltaic energy storage system to enter a corresponding charge-discharge mode, so that the photovoltaic energy storage system has high flexibility and versatility.

In a first aspect, the present disclosure provides a photovoltaic energy storage system. The system includes: a first DC/DC converter, an end of the first DC/DC converter being connected to a first connection point; a second DC/DC converter, an end of the second DC/DC converter being connected to a second connection point; a bus capacitor connected to another end of the first DC/DC converter and another end of the second DC/DC converter; an internal battery pack; a first switch having an end connected to the first connection point, and another end connected to the internal battery pack; at least one second switch, an end of each of the at least one second switch being connected to the second connection point, and another end of each of the at least one second switch being connected to a corresponding external battery pack; and a third switch connected between the first connection point and the second connection point. The first switch, the second switch, and the third switch are configured to enter corresponding on/off states based on a charge-discharge mode of the photovoltaic energy storage system.

With the photovoltaic energy storage system according to the present disclosure, by disposing the first switch connected to the internal battery pack, the second switch connected to an external battery pack, and the third switch disposed between the first connection point and the second connection point, each switch can be controlled to enter the corresponding on/off state based on the required charge-discharge mode and the condition of the external battery pack, thereby controlling the photovoltaic energy storage system to enter the corresponding charge-discharge mode, so that the photovoltaic energy storage system has high flexibility and versatility.

According to an embodiment of the present disclosure, in a first charge-discharge mode, each of the at least one second switch is turned off, the first switch and the third switch are turned on, and the first DC/DC converter and the second DC/DC converter are configured to operate alternately.

According to an embodiment of the present disclosure, in a second charge-discharge mode, any one of the at least one second switch is turned on, the first switch is turned on, the third switch is turned off, and the first DC/DC converter and the second DC/DC converter are configured to operate alternately.

According to an embodiment of the present disclosure, in a third charge-discharge mode, any one of the at least one second switch is turned on, the first switch and the third switch are turned off, the first DC/DC converter stops operating, and the second DC/DC converter operates.

According to an embodiment of the present disclosure, in response to the first switch being turned on, the third switch being turned off, and a first target switch among the at least one second switch being turned on, the first target switch is controlled to be turned off, the second DC/DC converter is controlled to stop operating, a power of the first DC/DC converter is increased, and a second target switch among the at least one second switch is controlled to be turned on. In response to turn-on of the second target switch being completed, the second DC/DC converter is controlled to operate, and the power of the first DC/DC converter is reduced.

According to an embodiment of the present disclosure, the first switch includes a seventh MOS transistor and an eighth MOS transistor that are connected in series and arranged opposite to each other; or the first switch includes an eleventh MOS transistor, a cathode of the eleventh MOS transistor being connected to the internal battery pack.

According to an embodiment of the present disclosure, when the first switch includes the seventh MOS transistor and the eighth MOS transistor that are connected in series and arranged opposite to each other, the third switch includes a fifth MOS transistor and a sixth MOS transistor that are connected in series and arranged opposite to each other. When the first switch includes the eleventh MOS transistor, the third switch includes a twelfth MOS transistor and a thirteenth MOS transistor that are connected in series and arranged opposite to each other, and the third switch has an end connected to the second connection point, and another end connected to the internal battery pack.

According to an embodiment of the present disclosure, the second switch includes a ninth MOS transistor and a tenth MOS transistor that are connected in series and arranged opposite to each other.

According to an embodiment of the present disclosure, the photovoltaic energy storage system further includes a transformer arranged between the bus capacitor and a bidirectional converter. An output end of an MPPT controller is connected to a low-voltage side or a high-voltage side of the transformer.

According to an embodiment of the present disclosure, the first DC/DC converter includes a first inductor, a first MOS transistor, and a second MOS transistor, the first MOS transistor and the second MOS transistor being connected in series. The first inductor has an end connected to the first connection point, and another end connected between the first MOS transistor and the second MOS transistor. A part formed by connecting the first MOS transistor and the second MOS transistor in series is connected in parallel with the bus capacitor. The second DC/DC converter includes a second inductor, a third MOS transistor, and a fourth MOS transistor, the third MOS transistor and the fourth MOS transistor being connected in series. The second inductor has an end connected to the second connection point, and another end connected between the third MOS transistor and the fourth MOS transistor. A part formed by connecting the third MOS transistor and the fourth MOS transistor in series is connected in parallel with the bus capacitor.

One or more technical solutions in the above embodiments of the present disclosure can at least provide the following advantageous effects.

By disposing the first switch connected to the internal battery pack, the second switch connected to an external battery pack, and the third switch disposed between the first connection point and the second connection point, each switch can be controlled to enter the corresponding on/off state based on the required charge-discharge mode and the condition of the external battery pack, thereby controlling the photovoltaic energy storage system to enter the corresponding charge-discharge mode, so that the photovoltaic energy storage system has high flexibility and versatility.

Further, while controlling a ripple current of the bus capacitor to be small, the two DC/DC converters can share a charge-discharge power, allowing each DC/DC converter to be designed with a lower power, and thus realizing cost reduction and efficiency improvement.

Furthermore, in the process of switching the external battery pack, by jointly controlling the switch and the DC/DC converter, fluctuation of an alternating current output power in the process of switching the external battery pack can be reduced, realizing smooth switching, and thus improving user experience.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic structural diagram of a photovoltaic energy storage system according to an embodiment of the present disclosure.
FIG. 2 is a second schematic structural diagram of a photovoltaic energy storage system according to an embodiment of the present disclosure.
FIG. 3 is a third schematic structural diagram of a photovoltaic energy storage system according to an embodiment of the present disclosure.
FIG. 4 is a fourth schematic structural diagram of a photovoltaic energy storage system according to an embodiment of the present disclosure.
FIG. 5 is a fifth schematic structural diagram of a photovoltaic energy storage system according to an embodiment of the present disclosure.
FIG. 6 is a schematic diagram illustrating a control effect of a photovoltaic energy storage system according to an embodiment of the present disclosure.

### DETAILED DESCRIPTION

Technical solutions in embodiments of the present disclosure will be clearly described with reference to the accompanying drawings in the embodiments of the present disclosure. Obviously, the described embodiments are part of the embodiments of the present disclosure, but not all the embodiments. Based on the embodiments of the present disclosure, all other embodiments obtained by those skilled in the art shall fall within the protection scope of the present disclosure.

Terms such as "first" and "second" in the description and the claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the description and the claims indicates at least one of the objects associated with "and/or". The character "/" generally indicates that the associated objects before and after the character are in an "or" relationship.

A photovoltaic energy storage system according to an embodiment of the present disclosure is described in detail below with reference to the accompanying drawings through specific embodiments and application scenarios thereof.

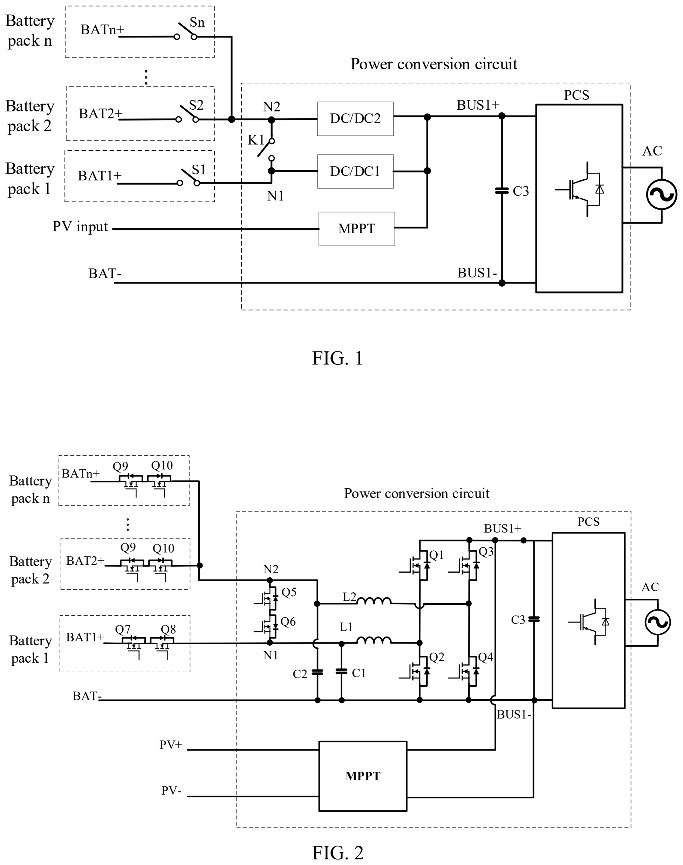

As illustrated in FIG. 1, the photovoltaic energy storage system includes a first DC/DC converter DC/DC1, a second DC/DC converter DC/DC2, a bus capacitor C3, an internal battery pack, a first switch S1, at least one second switch S2, and a third switch K1.

The DC/DC converter, i.e., a direct current-direct current converter, is an electric energy conversion circuit or an electromechanical device, which is configured to convert direct current (DC) power supply into direct current (or approximately direct current) power supplies of different voltages.

The photovoltaic energy storage system further includes a bidirectional converter. The bidirectional converter is arranged between the bus capacitor C3 and an alternating current power grid. The bidirectional converter is configured to realize bidirectional energy conversion between the direct current power supply and the alternating current power grid.

In some embodiments, the bidirectional converter may be a Power Conversion System (PCS).

The internal battery pack is a battery pack inherent in the photovoltaic energy storage system. The internal battery pack acts as a main battery pack.

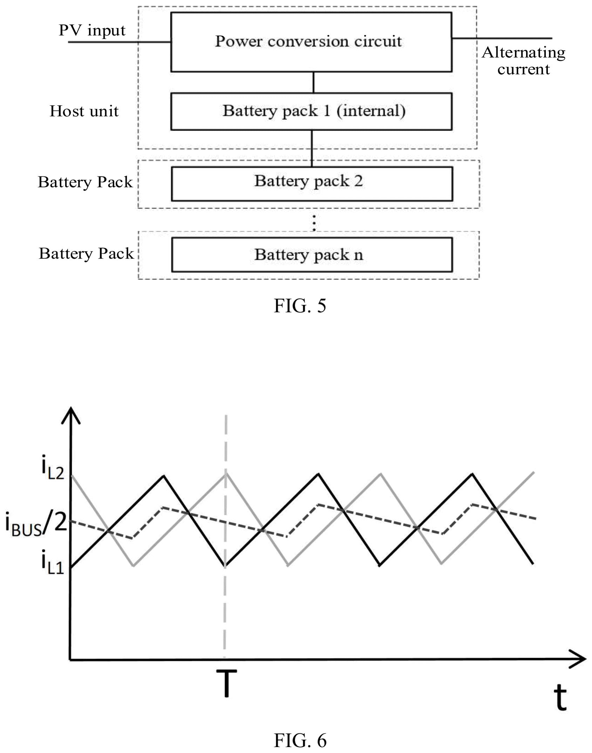

The first DC/DC converter DC/DC1, the second DC/DC converter DC/DC2, the bus capacitor C3, the first switch S1, the at least one second switch S2, the third switch K1, and the bidirectional converter form a power conversion circuit. As illustrated in FIG. 5, the power conversion circuit and the internal battery collectively serve as a host.

In some embodiments, an external battery pack system may be added to the host, so that the external battery pack operates with the host.

As illustrated in FIG. 1, an end of the first DC/DC converter DC/DC1 is connected to a first connection point N1. An end of the second DC/DC converter DC/DC2 is connected to a second connection point N2.

A part formed by connecting another end of the first DC/DC converter DC/DC1 and another end of the second DC/DC converter DC/DC2 in parallel is connected to the bus capacitor C3. The bus capacitor C3 is arranged between a positive bus and a negative bus. In addition, the positive bus and the negative bus are connected to the bidirectional converter. The part formed by connecting the other end of the first DC/DC converter DC/DC1 and the other end of the second DC/DC converter DC/DC2 in parallel is connected to an output end of an MPPT controller. The input end of the MPPT is configured to receive a photovoltaic input.

The first switch S1 has an end connected to the first connection point N1, and another end connected to the internal battery pack. When the first switch S1 is turned on, the internal battery pack is connected to the DC/DC converter. When the first switch S1 is turned off, the internal battery pack is disconnected from the DC/DC converter.

One or more second switches S2 may be provided. Each second switch S2 is used to provide one individual external battery pack. An end of each of the at least one second switch S2 is connected to the second connection point N2, and another end of each of the at least one second switch S2 is connected to a corresponding external battery pack. It should be understood that on/off states of the second switches S2 are independent of each other. When the second switch S2 is turned on, the external battery pack connected to the turned-on second switch S2 is connected to the DC/DC converter. When the second switch S2 is turned off, the external battery pack corresponding to the turned-off second switch S2 is disconnected from the DC/DC converter.

As illustrated in FIG. 1, a battery pack 1 is an internal battery pack, and a battery pack 2, ... a battery pack n are external battery packs, where n is a positive integer and n is greater than or equal to 2.

A third switch K1 is connected between the first connection point N1 and the second connection point N2.

The first switch S1, the second switch S2, and the third switch K1 are configured to enter corresponding on/off states based on a charge-discharge mode of the photovoltaic energy storage system.

In some embodiments, the charge-discharge mode includes a first charge-discharge mode, a second charge-discharge mode, and a third charge-discharge mode. The first charge-discharge mode is a mode in which no external battery pack operates, and only the internal battery pack operates. The second charge-discharge mode is a mode in which the internal battery pack and the external battery pack operate cooperatively. The third charge-discharge mode is a mode in which no internal battery pack operates, and only the external battery pack operates.

The first switch S1, the second switch S2, and the third switch K1 may be independently controlled from each other. In practice, each switch may be controlled to enter a corresponding on/off state based on a required charge-discharge mode and a condition of the external battery pack, thereby controlling the photovoltaic energy storage system to enter a corresponding charge-discharge mode, so that the photovoltaic energy storage system has high flexibility and versatility.

With the photovoltaic energy storage system provided by the present disclosure, by disposing the first switch S1 connected to the internal battery pack, the second switch S2 connected to the external battery pack, and the third switch K1 disposed between the first connection point N1 and the second connection point N2, each switch can be controlled to enter the corresponding on/off state based on the required charge-discharge mode and the condition of the external battery pack, thereby controlling the photovoltaic energy storage system to enter the corresponding charge-discharge mode, so that the photovoltaic energy storage system has high flexibility and versatility.

In some embodiments, in a first charge-discharge mode, each of the at least one second switch S2 is turned off, the first switch S1 and the third switch K1 are turned on, and the first DC/DC converter DC/DC1 and the second DC/DC converter DC/DC2 are configured to operate alternately.

In this embodiment, the first charge-discharge mode is a mode in which no external battery pack operates. The first switch S1 is turned on, the third switch K1 is turned on, no external battery pack operates or each second switch S2 is turned off, and the first DC/DC converter DC/DC1 and the second DC/DC converter DC/DC2 operate simultaneously, realizing a single internal battery operating mode. During operation, a duty cycle of the first DC/DC converter DC/DC1 and a duty cycle of the second DC/DC converter DC/DC2 are adjusted such that the first DC/DC converter DC/DC1 and the second DC/DC converter DC/DC2 operate alternately, and outputs of the internal battery packs are connected in parallel through two independent DC/DC converters.

In some embodiments, the first DC/DC converter DC/DC1 and the second DC/DC converter DC/DC2 may be configured with a lower power, such as half the power.

For example, as illustrated in FIG. 6, at a time point T (within a switching period), when an inductor current of a first inductor L1 is controlled to change from being decreased to being increased, an inductor current of the second inductor L2 is controlled to change from being increased to being decreased simultaneously. As illustrated in FIG. 2, assuming it is in a BOOST operating state, when a second MOS transistor Q2 is turned on, the inductor current of the first inductor L1 is changed from being decreased to being increased. Also, when a fourth MOS transistor Q4 is turned off, the inductor current of the second inductor L2 is changed from being increased to being decreased. In this way, alternate operation of the first DC/DC converter DC/DC1 and the second DC/DC converter DC/DC2 can be realized.

Through the above control logic, the internal battery pack can be connected to the first DC/DC converter DC/DC1 and the second DC/DC converter DC/DC2. By controlling the first DC/DC converter DC/DC1 and the second DC/DC converter DC/DC2 to operate alternately, a current ripple acting on the bus capacitor C3 is smaller. An inductor current flowing through each branch is shown in FIG. 6. iL1 represents an inductor current flowing through the first inductor L1, and iL2 represents an inductor current flowing through the second inductor L2. IBUS/2= (iL1+ iL2) /2 represents a ripple current of the BUS, which may be approximately equivalent to the current ripple of the bus capacitor C3. In this way, a reduced ripple current can be realized, thereby allowing selection of a relatively small bus capacitor.

With the photovoltaic energy storage system according to the embodiments of the present disclosure, while controlling the ripple current of the bus capacitor C3 to be smaller, the two DC/DC converters can share the charge-discharge power, allowing each DC/DC converter to be designed with a lower power, and thus realizing cost reduction and efficiency improvement.

In some embodiments, in a second charge-discharge mode, any one of the at least one second switch S2 is turned on, the first switch S1 is turned on, the third switch K1 is turned off, and the first DC/DC converter DC/DC1 and the second DC/DC converter DC/DC2 are configured to operate alternately.

In this embodiment, the second charge-discharge mode is a mode in which the internal battery pack and the external battery pack operate cooperatively.

In practice, the first switch S1 is turned on, the third switch K1 is turned off, any one of the second switches S2 is turned on, and other second switches S2 are turned off. In this case, the internal battery pack is connected to the first DC/DC converter DC/DC1 through the turned-on first switch S1, and the external battery pack is connected to the second DC/DC converter DC/DC2 through the turned-on second switch S2. The first DC/DC converter DC/DC1 and the second DC/DC converter DC/DC2 operate simultaneously, and the first DC/DC converter DC/DC1 and the second DC/DC converter DC/DC2 operate alternately, resulting in a small current ripple acting on the bus capacitor C3.

With the photovoltaic energy storage system according to the embodiments of the present disclosure, while controlling the ripple current of the bus capacitor C3 to be smaller, the two DC/DC converters can share the charge-discharge power, allowing each DC/DC converter to be designed with the lower power, and thus realizing cost reduction and efficiency improvement.

In some embodiments, in a third charge-discharge mode, any one of the at least one second switch S2 is turned on, the first switch S1 and the third switch K1 are turned off, the first DC/DC converter DC/DC1 stops operating, and the second DC/DC converter DC/DC2 operates.

In this embodiment, the third charge-discharge mode is a mode in which no internal battery pack operates.

In practice, the first switch S1 is turned off, the third switch K1 is turned off, any one of the second switches S2 is turned on, other second switches S2 are turned off, and the external battery pack is connected to the DC/DC converter through the turned-on second switch S2. The first DC/DC converter DC/DC1 and the second DC/DC converter DC/DC2 operate to realize operation of a single external battery pack.

With the photovoltaic energy storage system according to the embodiments of the present disclosure, by selecting to turn on different second switches S2 during charging and discharging, different external battery packs can be flexibly selected according to needs, providing more choices for the user, so that the photovoltaic energy storage system has high flexibility and versatility.

In some embodiments, when the first switch S1 is turned on, the third switch K1 is turned off, and a first target switch among the at least one second switch S2 is turned on, in this case, the first target switch is controlled to be turned off, the second DC/DC converter DC/DC2 is controlled to stop operating, a power of the first DC/DC converter DC/DC1 is increased, and a second target switch among the at least one second switch S2 is controlled to be turned on.

When turn-on of the second target switch S2 is completed, in this case, the second DC/DC converter DC/DC2 is controlled to operate, and the power of the first DC/DC converter DC/DC 1 is reduced.

In this embodiment, the first target switch and the second target switch are different second switches S2.

In some embodiments, the power of the first DC/DC converter DC/DC 1 may be increased for a first duration. The first duration is a shorter duration, sufficient to cover the time required for switching the external battery pack. The first duration may be specifically defined by the user, for example, set to 1 second or 1.5 seconds, etc. The present disclosure is not limited in this regard.

After the first duration, it is considered that turn-on of the second target switch is completed, and thus the second DC/DC converter DC/DC2 is controlled to operate, and the power of the first DC/DC converter DC/DC1 is reduced.

As an example, the battery pack 2 is switched to a battery pack 3 below for illustration.

As illustrated in FIG. 1, the first switch S1 is turned on, the third switch K1 is turned off, the second switch S2 connected to the battery pack 2 is turned on, other second switches S2 are turned off, and the photovoltaic energy storage system operates normally. When the external battery pack needs to be switched from the battery pack 2 to the battery pack 3 at a predetermined time, while keeping the first switch S1 turned on and the third switch K1 turned off, the second switch S2 connected to the battery pack 2 is turned off. Also, the power of the first DC/DC converter DC/DC1 is increased for a short time. During switching, the second DC/DC converter DC/DC2 is controlled to stop operating, and the second switch S2 connected to the battery pack 3 is turned on.

After the turn-on of the second switch S2 connected to the battery pack 3 is completed, the second DC/DC converter DC/DC2 is controlled to operate, and the power of the first DC/DC converter DC/DC1 is reduced simultaneously. Therefore, fluctuation of the AC-side charge-discharge power is smaller, realizing smooth switching, and thus improving user experience.

In practice, it is only necessary to control an on-off state of each MOS transistor at the beginning of the cycle. In a subsequent adjustment process, a duty cycle of each power transistor in the first DC/DC converter DC/DC1 and the second DC/DC converter DC/DC2 is automatically adjusted by PID control to realize switching control and power adjustment control.

It should be understood that in some embodiments, there is a situation where the external battery pack needs to be switched, and there is a certain delay for the turn-on of the switch during the switching. Through the above-described control logic, the power of the first DC/DC converter DC/DC1 is increased for a short time while the first target switch is turned off and the second target switch is not turned on yet, to reduce a sudden power drop caused by a lack of the external battery pack and realize seamless switching.

With the photovoltaic energy storage system according to the embodiments of the present disclosure, in the process of switching the external battery pack, by comprehensively controlling the switch and the DC/DC converter, fluctuation of an alternating current output power in the process of switching the external battery pack can be reduced, realizing smooth switching, and thus improving the user experience.

In some embodiments, the first switch S1, the second switch S2, and the third switch K1 may be semiconductors. As an example, the NMOS transistor is described below.

As illustrated in FIG. 2, in some embodiments, the first DC/DC converter DC/DC1 includes a first inductor L1, a first MOS transistor Q1, and a second MOS transistor Q2. The first MOS transistor Q1 and the second MOS transistor Q2 are connected in series.

In this embodiment, an anode of a diode of the first MOS transistor Q1 is connected to a cathode of a diode of the second MOS transistor Q2. A cathode side of the diode of the first MOS transistor Q1 is connected to a positive bus. An anode side of the diode of the second MOS transistor Q2 is connected to a negative bus. A part formed by connecting the first MOS transistor Q1 and the second MOS transistor Q2 in series is connected in parallel with the bus capacitor C3.

The first inductor L1 has an end connected to the first connection point N1, and connected to the negative bus by the first capacitor C1, and the first inductor L1 has another end connected between the first MOS transistor Q1 and the second MOS transistor Q2.

In some embodiments, the second DC/DC converter DC/DC2 includes a second inductor L2, a third MOS transistor Q3, and a fourth MOS transistor Q4. The third MOS transistor Q3 and the fourth MOS transistor Q4 are connected in series.

In this embodiment, an anode of a diode of the third MOS transistor Q3 is connected to a cathode of a diode of the fourth MOS transistor Q4. A cathode side of the diode of the third MOS transistor Q3 is connected to the positive bus. An anode side of the diode of the fourth MOS transistor Q4 is connected to the negative bus. A part formed by connecting the third MOS transistor Q3 and the fourth MOS transistor Q4 in series is connected in parallel with the bus capacitor C3.

The second inductor L2 has an end connected to the second connection point N2, and connected to the negative bus by the second capacitor C2, and the second inductor L2 has another end connected between the third MOS transistor Q3 and the fourth MOS transistor Q4.

An inductance of the first inductor L1 and an inductance of the second inductor L2 may be determined based on a switching frequency, a current magnitude, and a voltage difference. In this embodiment, the inductance of the first inductor L1 and the inductance of the second inductor L2 may be set to be equal.

As illustrated in FIG. 2, in some embodiments, the second switch S2 includes a ninth MOS transistor Q9 and a tenth MOS transistor Q10 that are connected in series and arranged opposite to each other.

In this embodiment, an anode of the ninth MOS transistor Q9 is connected to an anode of the tenth MOS transistor Q10. A cathode of the ninth MOS transistor Q9 is configured to be connected to the external battery pack. A cathode of the tenth MOS transistor Q10 is connected to the second connection point N2.

With the photovoltaic energy storage system according to the embodiments of the present disclosure, by configuring each switch as a complementary pair of devices, a current direction can be further controlled, and thus switching control of charging or discharging can be realized.

As illustrated in FIG. 2, in some embodiments, the first switch S1 includes a seventh MOS transistor Q7 and an eighth MOS transistor Q8 that are connected in series and arranged opposite to each other.

In this embodiment, an anode of a diode of the seventh MOS transistor Q7 is connected to an anode of a diode of the eighth MOS transistor Q8. A cathode of the diode of the seventh MOS transistor Q7 is connected to the internal battery pack. A cathode of the diode of the eighth MOS transistor Q8 is connected to the first connection point N1.

As illustrated in FIG. 2, in some embodiments, when the first switch S1 includes the seventh MOS transistor Q7 and the eighth MOS transistor Q8 that are connected in series and arranged opposite to each other, the third switch K1 includes a fifth MOS transistor Q5 and a sixth MOS transistor Q6 that are connected in series and arranged opposite to each other.

In this embodiment, an anode of a diode of the fifth MOS transistor Q5 is connected to an anode of a diode of the sixth MOS transistor Q6. A cathode of the diode of the fifth MOS transistor Q5 is connected to the second connection point N2. A cathode of the diode of the sixth MOS transistor Q6 is connected to the first connection point N1.

It should be understood that by setting the switch as a pair of MOS transistors, the current direction can be controlled, realizing charging or discharging switching.

A specific implementation logic will be described below in conjunction with the above circuit structure.

In the first charge-discharge mode, the ninth MOS transistor Q9 and the tenth MOS transistor Q10 are turned off, and the external battery pack is not connected to the photovoltaic energy storage system. The seventh MOS transistor Q7 and the eighth MOS transistor Q8 are turned on. The internal battery pack is connected to the photovoltaic energy storage system. When the first DC/DC converter DC/DC1 is turned on, the internal battery pack may be charged and discharged.

In some embodiments, by precisely controlling an on/off state of the seventh MOS transistor Q7 and an on/off state of the eighth MOS transistor Q8, precise control of charging or discharging can be further realized. Specific examples are as follows.

In the discharge scenario, the seventh MOS transistor Q7 and the sixth MOS transistor Q6 are controlled to be turned on, other MOS transistors included in the first switch S1, the second switch S2, and the third switch K1 are controlled to be turned off, and the internal battery pack is connected to the first DC/DC converter DC/DC1 via the first switch S1 and the first inductor L1. The internal battery pack is connected to the second DC/DC converter DC/DC2 via the first switch S1, the second switch S2, and the second inductor L2. In this case, the current flows from the battery pack to the converter, and thus the internal battery pack is alternately discharged.

In the charging scenario, the eighth MOS transistor Q8 and the fifth MOS transistor Q5 are controlled to be turned on, other MOS transistors included in the first switch S1, the second switch S2, and the third switch K1 are controlled to be turned off, and the internal battery pack is connected to the first DC/DC converter DC/DC1 via the first switch S1 and the first inductor L1. The internal battery pack is connected to the second DC/DC converter DC/DC2 via the first switch S1, the second switch S2, and the second inductor L2. In this case, the current flows from the converter to the battery pack, and thus the internal battery pack is alternately charged.

In the second charge-discharge mode, the fifth MOS transistor Q5 and the sixth MOS transistor Q6 are turned off. The ninth MOS transistor Q9 and the tenth MOS transistor Q10 under any branch circuit are turned on. A corresponding external battery pack in the branch circuit is connected to the photovoltaic energy storage system, realizing charging and discharging of the external battery pack.

In some embodiments, by precisely controlling an on/off state of the ninth MOS transistor Q9 and an on/off state of the tenth MOS transistor Q10, precise control of charging or discharging can be further realized. Specific examples are as follows.

In the discharge scenario, the seventh MOS transistor Q7 and the ninth MOS transistor Q9 are controlled to be turned on, other MOS transistors included in the first switch S1, the second switch S2, and the third switch K1 are controlled to be turned off, and the internal battery pack is connected to the first DC/DC converter DC/DC1 via the first switch S1 and the first inductor L1. The external battery pack is connected to the second DC/DC converter DC/DC2 via the second switch S2 and the second inductor L2. In this case, the current flows from the battery pack to the converter, and thus the external battery pack and the internal battery pack are alternately discharged.

In the charging scenario, the eighth MOS transistor Q8 and the tenth MOS transistor Q10 are controlled to be turned on, other MOS transistors included in the first switch S1, the second switch S2, and the third switch K1 are controlled to be turned off, and the internal battery pack is connected to the first DC/DC converter DC/DC1 via the first switch S1 and the first inductor L1. The external battery pack is connected to the second DC/DC converter DC/DC2 via the second switch S2 and the second inductor L2. In this case, the current flows from the converter to the battery pack, achieving alternate charging of the internal battery pack and the external battery pack.

In the third charge-discharge mode, the fifth MOS transistor Q5, the sixth MOS transistor Q6, the seventh MOS transistor Q7, and the eighth MOS transistor Q8 are turned off, the ninth MOS transistor Q9 and the tenth MOS transistor Q10 under any branch are turned on, and a corresponding external battery pack in the branch is connected to the photovoltaic energy storage system, realizing charging and discharging of the external battery pack.

By setting the ninth MOS transistor Q9 and the tenth MOS transistor Q10 to be in an opposite on-off state, control of charging or discharging can be further realized. A specific implementation logic is similar to that described above, which is not repeatedly described herein.

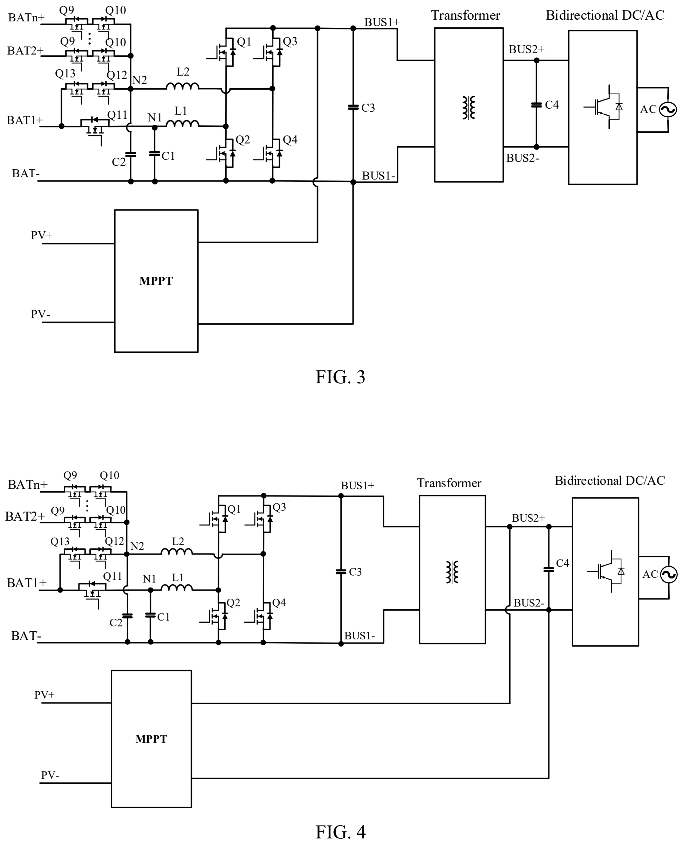

As illustrated in FIG. 3, in some embodiments, the first switch S1 includes an eleventh MOS transistor Q11. In addition, a cathode of the eleventh MOS transistor Q11 is connected to the internal battery pack.

In this embodiment, an anode of the eleventh MOS transistor Q11 is connected to the first connection point N1.

As illustrated in FIG. 3, in some embodiments, when the first switch S1 includes an eleventh MOS transistor Q11, in this case, the third switch K1 includes a twelfth MOS transistor Q12 and a thirteenth MOS transistor Q13 that are connected in series and arranged opposite to each other. In addition, the third switch K1 has an end connected to the second connection point N2, and another end connected to the internal battery pack.

In this embodiment, an anode of the twelfth MOS transistor Q12 is connected to an anode of the thirteenth MOS transistor Q13, a cathode of the twelfth MOS transistor Q12 is connected to the second connection point N2, and a cathode of the thirteenth MOS transistor Q13 is connected to the internal battery pack.

For example, when the eleventh MOS transistor Q11 is turned on, the internal battery pack is connected to the first DC/DC converter DC/DC 1 via the first inductor L1 to realize discharge of the internal battery pack. When the twelfth MOS transistor Q12 is turned on, the internal battery pack can be charged. Through this circuit, a discharge efficiency can be improved, and the number of the MOS transistors can be reduced, thereby reducing a cost.

In some embodiments, by controlling the on-off state of the corresponding MOS transistor, a power of the branch where the second DC/DC converter DC/DC2 is located can be reduced, realizing cost reduction and efficiency improvement.

In some embodiments, the photovoltaic energy storage system may further include a transformer.

In this embodiment, the transformer is arranged between the bus capacitor C3 and a bidirectional converter.

The bidirectional converter is a bidirectional AC/DC converter, which can act as an inverter or a rectifier circuit.

The MPPT may be a Boost circuit or a Buck-Boost circuit. An output end of an MPPT controller may be connected to a low voltage side or to a high voltage side of the transformer. The low-voltage side is a side close to the battery pack. The high-voltage side is a side close to the alternating current. That is, a voltage from BUS1+ to BUS- is a low voltage BUS, and a voltage from BUS2+ to BUS2- is a high voltage BUS.

The output end of the MPPT controller may be connected to the low-voltage side or the high-voltage side of the transformer. The low-voltage side is the side close to the battery pack, and the high-voltage side is the side close to the alternating current.

FIG. 3 illustrates a schematic diagram of the MPPT controller whose output end is connected to the low-voltage side of the transformer, which is suitable for a scenario with a low-voltage battery and fewer photovoltaic modules, such as a scenario with 1 to 3 photovoltaic modules.

FIG. 4 illustrates a schematic diagram of the MPPT controller whose output end is connected to the high-voltage side of the transformer, which is suitable for a scenario with more photovoltaic modules, such as a scenario with 10 or more photovoltaic modules.

In some embodiments, for the connection manner of the first switch S1 and the third switch K1 as shown in FIG. 2, the output end of the MPPT controller may also be arranged at the low-voltage side of the transformer or connected to the high-voltage side of the transformer.

A control logic of each switch is similar to that in the above embodiments, which is not limited herein.

Of course, in other embodiments, other types of transistors may be used for corresponding arrangements, which is not limited herein.

The photovoltaic energy storage system according to the embodiments of the present disclosure may be used in a photovoltaic energy storage system scenario with alternating current-side isolation, so that the photovoltaic energy storage system has high universality and may be used in a wide range of application scenarios.

The embodiments of the present disclosure are described above with reference to the accompanying drawings, but the present disclosure is not limited to the above-described specific embodiments, which are only schematic and not limited. Many forms can be further made by those skilled in the art under the inspiration of the present disclosure without departing from the spirit of the present disclosure and the scope of protection of the claims, all of which fall within the protection of the present disclosure.

Reference throughout this specification to "an embodiment," "some embodiments," "an illustrative embodiment," an example," "a specific example," or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. In addition, the particular features, structures, materials, or characteristics described may be combined in any suitable manner in any one or more embodiments or examples.

Although embodiments of the present disclosure have been illustrated and described, it is conceivable for those skilled in the art that various changes, modifications, replacements, and variations can be made to these embodiments without departing from the principles and concept of the present disclosure. The scope of the present disclosure shall be defined by the claims as appended and their equivalents.

## Claims

1. A photovoltaic energy storage system, comprising:
a first DC/DC converter, an end of the first DC/DC converter being connected to a first connection point;
a second DC/DC converter, an end of the second DC/DC converter being connected to a second connection point;
a bus capacitor connected to another end of the first DC/DC converter and another end of the second DC/DC converter;
an internal battery pack;
a first switch having an end connected to the first connection point, and another end connected to the internal battery pack;
at least one second switch, an end of each of the at least one second switch being connected to the second connection point, and another end of each of the at least one second switch being connected to a corresponding external battery pack; and
a third switch connected between the first connection point and the second connection point, wherein the first switch, the second switch, and the third switch are configured to enter corresponding on/off states based on a charge-discharge mode of the photovoltaic energy storage system.

2. The photovoltaic energy storage system according to claim 1, wherein, in a first charge-discharge mode, each of the at least one second switch is turned off, the first switch and the third switch are turned on, and the first DC/DC converter and the second DC/DC converter are configured to operate alternately.

3. The photovoltaic energy storage system according to claim 1, wherein, in a second charge-discharge mode, any one of the at least one second switch is turned on, the first switch is turned on, the third switch is turned off, and the first DC/DC converter and the second DC/DC converter are configured to operate alternately.

4. The photovoltaic energy storage system according to claim 1, wherein, in a third charge-discharge mode, any one of the at least one second switch is turned on, the first switch and the third switch are turned off, the first DC/DC converter stops operating, and the second DC/DC converter operates.

5. The photovoltaic energy storage system according to any one of claims 1 to 4, wherein:
in response to the first switch being turned on, the third switch being turned off, and a first target switch among the at least one second switch being turned on, the first target switch is controlled to be turned off, the second DC/DC converter is controlled to stop operating, a power of the first DC/DC converter is increased, and a second target switch among the at least one second switch is controlled to be turned on; and
in response to turn-on of the second target switch being completed, the second DC/DC converter is controlled to operate, and the power of the first DC/DC converter is reduced.

6. The photovoltaic energy storage system according to any one of claims 1 to 4, wherein:
the first switch comprises a seventh MOS transistor and an eighth MOS transistor that are connected in series and arranged opposite to each other; or
the first switch comprises an eleventh MOS transistor, a cathode of the eleventh MOS transistor being connected to the internal battery pack.

7. The photovoltaic energy storage system according to claim 6, wherein:
when the first switch comprises the seventh MOS transistor and the eighth MOS transistor that are connected in series and arranged opposite to each other, the third switch comprises a fifth MOS transistor and a sixth MOS transistor that are connected in series and arranged opposite to each other; and
when the first switch comprises the eleventh MOS transistor, the third switch comprises a twelfth MOS transistor and a thirteenth MOS transistor that are connected in series and arranged opposite to each other, and the third switch has an end connected to the second connection point, and another end connected to the internal battery pack.

8. The photovoltaic energy storage system according to any one of claims 1 to 4, wherein the second switch comprises a ninth MOS transistor and a tenth MOS transistor that are connected in series and arranged opposite to each other.

9. The photovoltaic energy storage system according to any one of claims 1 to 4, further comprising:
a transformer arranged between the bus capacitor and a bidirectional converter, wherein an output end of an MPPT controller is connected to a low-voltage side or a high-voltage side of the transformer.

10. The photovoltaic energy storage system according to any one of claims 1 to 4, wherein:
the first DC/DC converter comprises a first inductor, a first MOS transistor, and a second MOS transistor, the first MOS transistor and the second MOS transistor being connected in series, the first inductor having an end connected to the first connection point, and another end connected between the first MOS transistor and the second MOS transistor, and a part formed by connecting the first MOS transistor and the second MOS transistor in series being connected in parallel with the bus capacitor; and
the second DC/DC converter comprises a second inductor, a third MOS transistor, and a fourth MOS transistor, the third MOS transistor and the fourth MOS transistor being connected in series, the second inductor having an end connected to the second connection point, and another end connected between the third MOS transistor and the fourth MOS transistor, and a part formed by connecting the third MOS transistor and the fourth MOS transistor in series being connected in parallel with the bus capacitor.
